# EUROPEAN PATENT APPLICATION

(11) **EP 4 571 975 A1**
(43) Date of publication of application: **18.06.2025**
(21) Application number: 23900992.1
(22) Date of filing: 27.11.2023
(51) Int. Cl.: H01M 50/244, H01M 50/107

(54) **BATTERY GRIPPER**

(30) Priority: 05.12.2022 KR 20220167798
(71) Applicant: LG Energy Solution, Ltd., Seoul 07335 (KR)
(72) Inventor: KIM, In-Kwon, Daejeon 34122 (KR); LEE, Jun-Oh, Daejeon 34122 (KR); LEE, Gil-Young, Daejeon 34122 (KR)
(74) Representative: Goddar, Heinz J.
(86) International application number: PCT/KR2023/019285
(87) International publication number: WO 2024/122973

(57) **Abstract**

A battery gripper according to an embodiment of the present disclosure includes a side support supporting the side surface of a battery cell; at least one first magnet adapter provided in at least some areas of the side support; a first magnet embedded in the first magnet adapter and configured to face the battery cell; and a lower support supporting the lower surface of the battery cell.

## Description

### TECHNICAL FIELD

The present disclosure relates to a battery gripper. More specifically, it relates to a fixing device for a cylindrical battery cell.

The present application claims priority to Korean Patent Application No. 10-2022-0167798 filed on December 5, 2022 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, after inserting an electrode assembly in the form of a jelly roll with a current collector plate welded into a battery can, alignment of the cell is required for welding the current collector plate and the beading portion of the battery can. At this time, welding and movement are performed while rotating in a rotary form due to the driving characteristics of the equipment, so that the rotation and slip phenomenon of the battery cell occurred in the existing general gripper type. Accordingly, it became necessary to develop a gripper in a form where the rotation or slip of the cell does not occur in order to satisfy the quality of welding.

### DISCLOSURE

### Technical Problem

It is an object of the present disclosure to provide a gripper in which the position and angle of a battery do not change during movement after accurately aligning the position to a welding position in a rotary type driving equipment.

That is, it is an object of the present disclosure to prevent the slip phenomenon of the battery.

Furthermore, it is another object of the present disclosure to improve the position alignment of a battery and the welding position inspection yield.

In another aspect, it is still another object of the present disclosure to improve welding quality.

However, technical problems to be solved by the present disclosure are not limited to the above-described problems, and other problems not mentioned herein may be clearly understood by those skilled in the art from the following description of the present disclosure.

### Technical Solution

To solve the above-described problem, a battery gripper, comprising: a side support supporting the side surface of a battery cell; at least one first magnet adapter provided in at least some areas of the side support; a first magnet embedded in the first magnet adapter and configured to face the battery cell; and a lower support supporting the lower surface of the battery cell.

In an aspect of the present disclosure, the first magnet adapter is configured to be detachable from the side support.

In another aspect of the present disclosure, the first magnet adapter is provided in plurality spaced apart from each other by a predetermined distance along the outer circumferential surface of the battery cell.

In another aspect of the present disclosure, the battery gripper comprises: a second magnet adapter provided in at least some areas of the lower support; and a second magnet embedded in the second magnet adapter and configured to face the battery cell.

In another aspect of the present disclosure, the second magnet adapter is configured to be detachable from the lower support.

In an aspect of the present disclosure, the second magnet adapter has a disk shape.

In another aspect of the present disclosure, the second magnet is provided along the circumferential direction of the second magnet adapter.

In another aspect of the present disclosure, the second magnet adapter is configured to be rotatable with respect to the central axis of the battery cell.

For instance, the battery gripper comprises a motor connected to the second magnet adapter.

In an aspect of the present disclosure, the side support comprises: a first side support that comprises the first magnet adapter; and a second side support that does not comprise the first magnet adapter.

Preferably, the first side support is configured to be capable of: advancing toward the battery cell; and retreating from the battery cell.

In another aspect of the present disclosure, the second magnet adapter is configured to be capable of: advancing toward the battery cell; and retreating from the battery cell.

In another aspect of the present disclosure, the side support and the lower support comprise a resin material.

### Advantageous Effects

According to the present disclosure, it is possible to prevent the battery from slipping by holding the battery with magnetic force when moving from the rotary part to the welding head.

In another aspect, according to the present disclosure, it can be expected to improve the position alignment of a battery and the welding position inspection yield.

In still another aspect, according to the present disclosure, welding quality can be improved.

However, effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view for describing a battery gripper according to an embodiment of the present disclosure.
FIG. 2 is a view for describing a state in which a battery is mounted on the battery gripper of FIG. 1.
FIG. 3 is a cross-sectional view taken along line A-A' in FIG. 2.
FIG. 4 is a view for describing a battery gripper according to another embodiment of the present disclosure.
FIG. 5 is a view for describing a battery gripper according to still another embodiment of the present disclosure.
FIG. 6 is a view for describing a battery gripper according to still another embodiment of the present disclosure.
FIG. 7 is a view for describing a process in which a battery enters a battery gripper according to an embodiment of the present disclosure.
FIG. 8 is a view for describing a process of aligning the position of the battery in a battery gripper according to an embodiment of the present disclosure after the battery enters.
FIG. 9 is a view for describing a process in which a first side support of a battery gripper according to an embodiment of the present disclosure enters the battery after aligning the position of the battery.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The conventional battery gripper had a general gripper form without a separate slip prevention function in the gripper at the battery handover rotary. In a cylindrical battery, after inserting an electrode assembly in the form of a jelly roll with a current collector plate CP welded into a battery can, alignment of the battery is required for welding the current collector plate CP and the beading portion BD of the battery can. At this time, welding and movement are performed while rotating in a rotary form due to the driving characteristics of the equipment, so that the rotation and slip phenomenon of the battery occurred in the existing general gripper type. That is, in the conventional battery fixing device, there was no mechanism or shape to prevent the battery from slipping in the gripper, thereby causing slippage. Accordingly, it became necessary to develop a gripper in a form where the rotation or slip of the battery does not occur in order to satisfy the quality of welding.

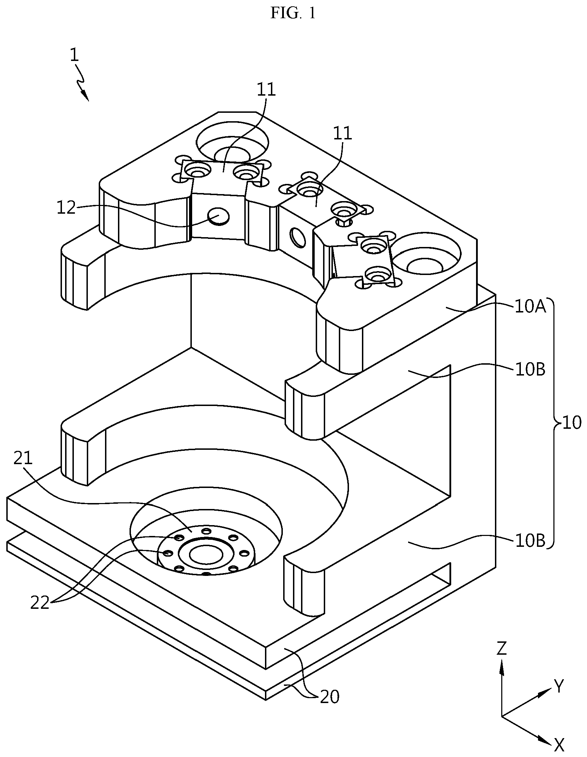

Accordingly, the present inventor carefully examined the configuration for preventing rotation or slip when welding the beading portion BD of a cylindrical battery, and as a result, the battery gripper 1 of the present disclosure has been delivered, which will be described in detail below with reference to FIGS. 1 to 9.

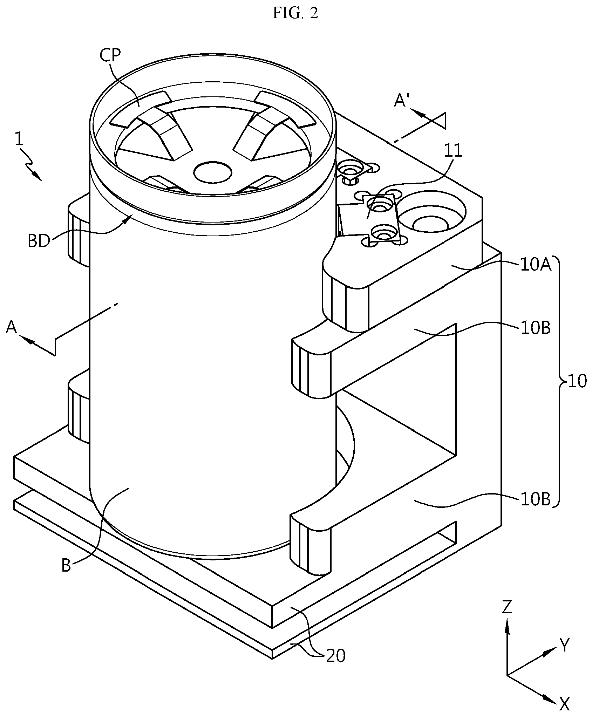

FIG. 1 is a view for describing a battery gripper 1 according to an embodiment of the present disclosure, and FIG. 2 is a view for describing a state in which a battery is mounted on the battery gripper 1 of FIG. 1.

Referring to FIGS. 1 and 2, the battery gripper 1 according to an embodiment of the present disclosure includes a side support 10 and a lower support 20.

Here, the side support 10 may support the side surface of the battery cell B. For example, when the battery cell B is a cylindrical battery cell B, the side support 10 may be configured to have a substantially arc shape to enable to support the side surface of the cylindrical battery cell B. In this case, the radius of the arc constituting the side support 10 may be greater than or equal to the radius of the cylindrical battery cell B. That is, in this structure, the side support 10 may be in the form of surrounding the side surface of the cylindrical battery cell B. The side support 10 may support at least some areas of the side surface of the battery cell B. For example, as shown in FIGS. 1 and 2, the side support 10 may be provided in the form of a plurality of arc-shaped ribs. Alternatively, in another embodiment, the side support 10 may also be provided in the form of a single arc-shaped rib. Alternatively, in another embodiment, the side support 10 may also have a curved shape that entirely surrounds the side surface of the cylindrical battery cell B.

In one aspect of the present disclosure, at least one first magnet adapter 11 may be provided in at least some areas of the side support 10. Here, the first magnet adapter 11 may be configured to face the battery cell B. Furthermore, the first magnet adapter 11 may have a first magnet 12 embedded therein. Here, the first magnet 12 embedded in the first magnet adapter 11 may be configured to face the battery cell B. For example, referring to FIG. 2, the first magnet 12 may be configured to face the battery cell B. More specifically, the first magnet 12 may be embedded in a space within the first magnet adapter 11 and may be exposed toward the outside of the first magnet adapter 11 through a predetermined hole provided in the first magnet adapter 11.

According to this configuration of the present disclosure, since the battery can of the battery cell B is made of a metal material, a magnetic force acts between the first magnet 12 and the battery can. Accordingly, the battery can may be accurately fixed to a specific position within the battery gripper 1. That is, the first magnet 12 holds the battery cell B with magnetic force, thereby enabling to prevent the battery cell B from slipping. As a result, the position alignment of the battery cell B and the welding position inspection yield can be improved, and welding quality can be improved.

In another aspect of the present disclosure, the first magnet adapter 11 may be configured to be detachable from the side support 10.

For example, referring to FIGS. 1 and 2, the side support 10 has some space recessed therein to accommodate the first magnet adapter 11, and the first magnet adapter 11 may be accommodated in the space. The magnet adapter may be fixed on the side support 10. The fixing method may be, for example, by screwing, but the coupling method is not limited thereto. On the other hand, the first magnet adapter 11 may also be removed from the side support. That is, the first magnet adapter 11 may be configured to be detachable from the side support 10.

According to this configuration of the present disclosure, the strength of the magnetic force acting on the battery can may be easily adjusted in some cases. For example, when the type of battery cell B changes or the material of which the battery can of the battery cell B is made changes, it may be necessary to adjust the strength of the magnetic force for fixing the battery cell B. In this case, by removing the installed first magnet adapter 11 and then installing another first magnet adapter 11, the strength of the magnetic force may be easily adjusted without replacing the entire gripper or the entire side support 10. That is, if only the outer shape of the first magnet adapter 11 and the size of the space recessed into the side support 10 are constant, the battery gripper 1 may be used by replacing various types of adapters composed of a variety of types or sizes of the first magnet 12 embedded in the first magnet adapter 11.

In another aspect of the present disclosure, the first magnet adapter 11 may be provided in plurality in at least some areas of the side support 10.

For example, referring to FIGS. 1 and 2, the first magnet adapter 11 may be provided in plurality spaced apart from each other by a predetermined distance along the outer circumferential surface of the battery cell B. In the embodiment of FIGS. 1 and 2, the first magnet adapter 11 is provided in three along the side facing the battery cell B, but the embodiment of the present disclosure is not limited thereto. For example, the first magnet adapter 11 may be provided in a single number or may be provided in a larger number than the embodiment of FIGS. 1 and 2.

Meanwhile, according to a structure in which the first magnet adapter 11 is provided in plurality, the anti-slip effect of the battery cell B may be further improved. For example, when the first magnet adapter 11 is provided in plurality, the magnitude of the attractive force acting between the first magnet adapter 11 and the battery cell B becomes stronger, and thus the anti-slip effect in the tangential direction of the battery cell B may be further improved.

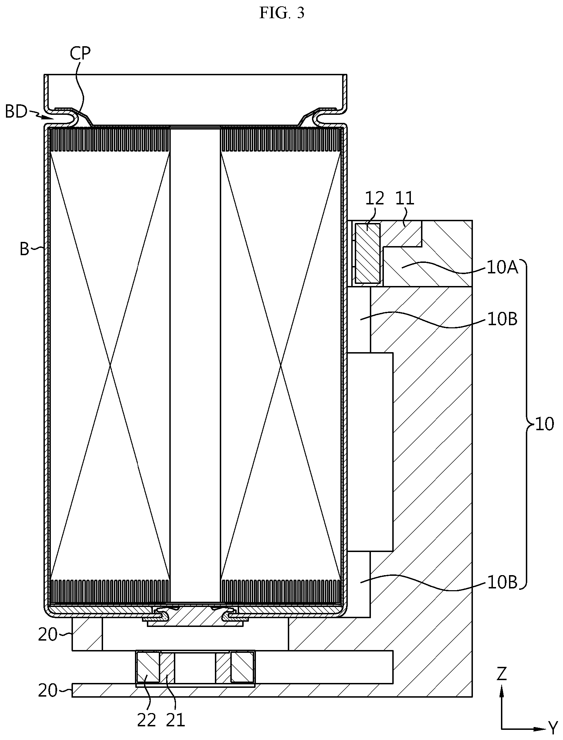

FIG. 3 is a cross-sectional view taken along line A-A' in FIG. 2.

Referring to FIG. 3, the first magnet adapter 11 of the battery gripper 1 according to an embodiment of the present disclosure may be spaced apart from the battery cell B by a predetermined distance. That is, the first magnet adapter 11 may not be in direct contact with the battery cell B. Accordingly, the first magnet 12 embedded in the first magnet adapter 11 may also be spaced apart from the battery cell B by a predetermined distance. That is, the first magnet 12 may not be in direct contact with the battery cell B.

According to this structure, by preventing direct contact of the first magnet adapter 11 and/or the first magnet 12 with the battery cell B, it is possible to prevent scratches from occurring on the battery can of the battery cell B. That is, since the first magnet 12 exerts magnetic force even without being in direct contact with the battery cell B, it does not necessarily have to be in contact with the battery cell B. Rather, it is preferable to be spaced apart from the battery cell B by a predetermined distance to prevent the occurrence of scratches. However, if the gap between the first magnet 12 and the battery cell B is too far, the strength of the magnetic force also weakens, and thus it is not preferable for the gap to become excessively large.

In another aspect of the present disclosure, the side support 10 and the lower support 20 may include a resin material.

For example, the side support 10 and the lower support 20 may include a plastic resin material. Preferably, the side support 10 and the lower support 20 may include a polyether ether ketone (PEEK) material. Since the side support 10 and the lower support 20 are components in direct contact with the battery cell B, there is a high possibility of scratches occurring in the battery cell B if the side support 10 and the lower support 20 include a material with high hardness. Therefore, it is preferable to include a resin material that does not cause scratches while having a predetermined hardness. For example, since a polyether ether ketone (PEEK) material has a certain level of hardness and is also highly brittle, it can be applied to the side support 10 and the lower support 20 of the present disclosure.

In the same intent, the first magnet adapter 11 may include a resin material. For example, the first magnet adapter 11 may include a plastic resin material. Preferably, the first magnet adapter 11 may include a polyether ether ketone (PEEK) material.

Likewise, the second magnet adapter 21 to be described later may also include a resin material. For example, the second magnet adapter 21 may include a plastic resin material. Preferably, the second magnet adapter 21 may include a polyether ether ketone (PEEK) material.

In still another aspect of the present disclosure, the first magnet 12 may be made of an electromagnet. Likewise, the second magnet 22 to be described later may be made of an electromagnet. In this case, additional components necessary for the operation of the electromagnet may be included as components of the present disclosure.

In this way, when the first magnet 12 and/or the second magnet 22 are made of electromagnets, the strength of the magnetic force may be adjusted without replacing the first magnet adapter 11 and/or the second magnet adapter 21.

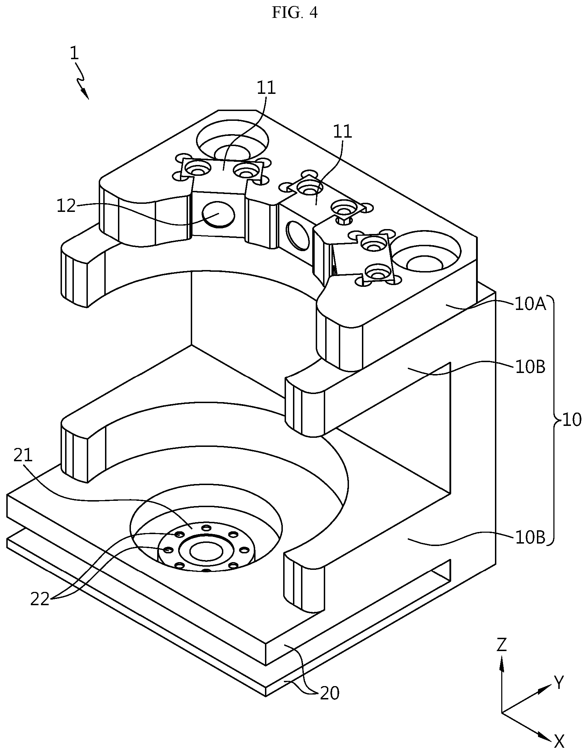

FIG. 4 is a view for describing a battery gripper 1 according to another embodiment of the present disclosure.

Referring to FIG. 4, the size of the first magnet 12 of the battery gripper 1 according to another embodiment of the present disclosure may be different. Alternatively, as shown in the drawing, the size of the hole provided in the first magnet adapter 11 may be different. For example, the size of the first magnet 12 may be larger or smaller. Alternatively, the size of the hole provided in the first magnet adapter 11 may be larger or smaller.

According to this structure, various types of magnet adapters having various magnetic forces may be configured by varying the size of the first magnet 12 embedded in the first magnet adapter 11. Alternatively, various types of magnet adapters having various magnetic forces may be configured by varying the size of the hole provided in the first magnet adapter 11. Accordingly, it may be possible to apply various magnetic forces depending on the situation.

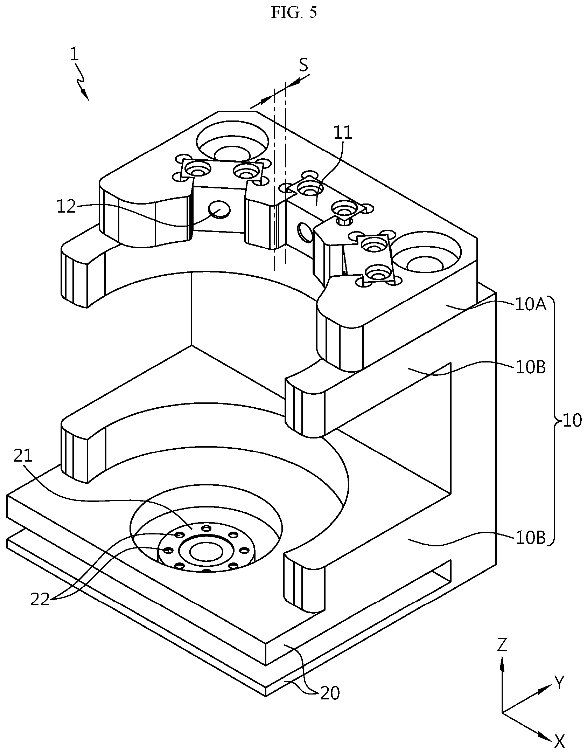

FIG. 5 is a view for describing a battery gripper 1 according to still another embodiment of the present disclosure.

Referring to FIG. 5, the gap S between the surface of the first magnet adapter 11 facing the battery cell B and the battery cell B, according to still another embodiment of the present disclosure, may be different.

For example, as shown in FIG. 5, the gap S between the surface of the first magnet adapter 11 facing the battery cell B and the battery cell B may be larger than that in FIG. 1. In this case, the magnitude of the magnetic force acting on the battery cell B may be smaller. Alternatively, the gap S between the surface of the first magnet adapter 11 facing the battery cell B and the battery cell B may be smaller than that in FIG. 1. In this case, the magnitude of the magnetic force acting on the battery cell B may be larger.

According to this structure, various types of magnet adapters having various magnetic forces may be configured by varying the gap S between the first magnet adapter 11 and the battery cell B.

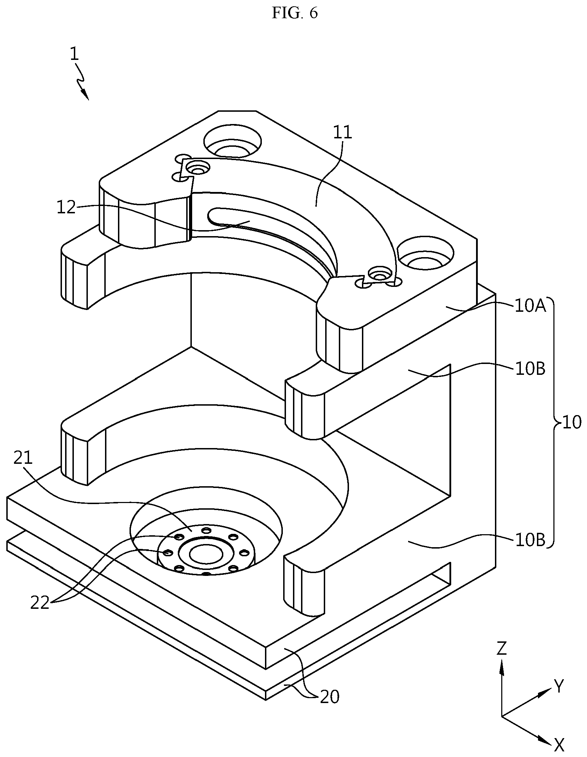

FIG. 6 is a view for describing a battery gripper 1 according to still another embodiment of the present disclosure.

Referring to FIG. 6, the first magnet adapter 11 according to still another embodiment of the present disclosure may be configured to have a curved shape along the curved surface of the side support 10.

For example, as shown in FIG. 6, the first magnet adapter 11 may be configured to have a substantially arc shape along the outer circumferential surface of the cylindrical battery cell B. In this case, the first magnet 12 embedded in the first magnet adapter 11 may also be similarly provided in an arc shape. Meanwhile, the hole provided in the first magnet adapter 11 may also be provided in an arc shape, and in some cases, may also be provided in the form of a plurality of circles.

According to this structure, a strong magnetic force may be secured even with a single magnet adapter.

Referring to FIGS. 1 to 3 again, the battery gripper 1 according to an embodiment of the present disclosure may further include a second magnet adapter 21 and a second magnet 22. More specifically, the battery gripper 1 may include a second magnet adapter 21 provided in at least some areas of the lower support 20; and a second magnet 22 embedded in the second magnet adapter 21 and configured to face the battery cell B.

According to this structure, the magnetic force acts on the battery cell B from the first magnet 12 in a lateral direction and the magnetic force acts on the lower portion of the battery cell B from the second magnet 22, so that the fixing force of the battery cell B may be further strengthened. That is, the anti-slip effect of the battery cell B may be improved.

In one aspect of the present disclosure, the second magnet adapter 21 may be configured to be detachable from the lower support 20.

For example, referring to FIGS. 1 to 3, the second magnet adapter 21 may be located in a downward direction of the battery cell B. In this case, the second magnet adapter 21 may move in a direction parallel to the central axis C of the battery cell B. For example, the second magnet adapter 21 may advance toward the battery cell B in a direction parallel to the central axis C of the battery cell B. In addition, the second magnet adapter 21 may retreat from the battery cell B in a direction parallel to the central axis C of the battery cell B. Alternatively, the second magnet adapter 21 may advance and/or retreat in a lateral direction through the space between the lower supports 20.

As the second magnet adapter 21 is configured to be detachable from the lower support 20 in this manner, it is possible to easily align the position and angle of the battery cell B. It may also enable the battery cell B to enter the next rotary.

In another aspect of the present disclosure, the second magnet adapter 21 may have a substantially disk shape.

For example, referring to FIGS. 1 and 3, the second magnet adapter 21 has a substantially disk shape. Alternatively, the second magnet adapter 21 may also have a cylindrical shape with a predetermined height. Here, the central axis C of the second magnet adapter 21 may coincide with the central axis C of the battery cell B.

According to this structure, when the second magnet adapter 21 rotates, the battery cell B may rotate by an angle equal to the rotation angle of the second magnet adapter 21. For example, when the battery cell B enters the battery gripper 1, the welding position of the beading portion BD and the current collector plate CP may not be in the correct position. In this case, by rotating the battery cell B through the rotation of the second magnet 22, the welding position between the beading portion BD and the current collector plate CP may be set to the correct position.

Preferably, the second magnet 22 may be provided along the circumferential direction of the second magnet adapter 21.

For example, referring to FIGS. 1 and 3, the second magnet 22 may be embedded in the second magnet adapter 21. In this case, when the second magnet adapter 21 has a substantially disk shape, the second magnet 22 may be configured as a substantially ringshaped magnet embedded in the disk. Alternatively, the second magnet 22 may also be configured to have a substantially cylindrical shape with a central axis C parallel to the central axis C of the second magnet adapter 21.

According to this structure, when the second magnet adapter 21 rotates, the battery cell B may rotate by an angle equal to the rotation angle of the second magnet adapter 21.

In still another aspect of the present disclosure, the second magnet adapter 21 may be configured to be rotatable with respect to the central axis C of the battery cell B.

For example, the battery gripper 1 according to an embodiment of the present disclosure may include a motor connected to the second magnet adapter 21. That is, when the motor connected to the second magnet adapter 21 rotates, the second magnet adapter 21 may rotate. As a result, the battery cell B may rotate due to the magnetic force exerted by the second magnet 22 embedded in the second magnet adapter 21.

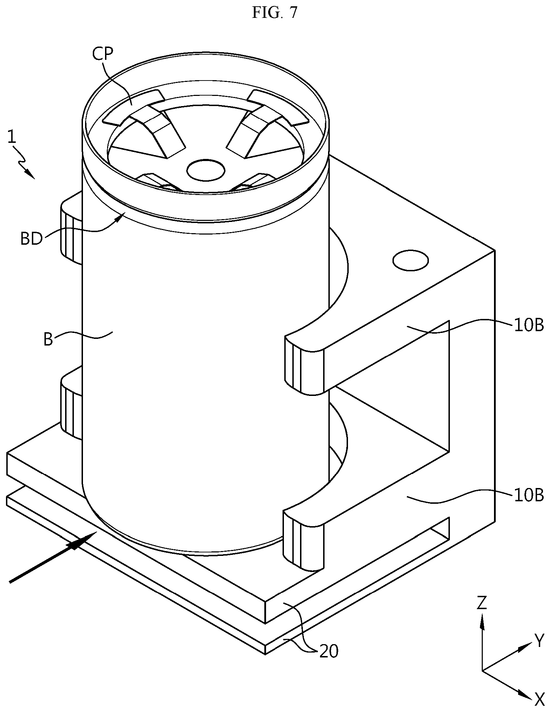

According to this structure, by rotating the battery cell B through the rotation of the second magnet 22, the welding position between the beading portion BD and the current collector plate CP may be set to the correct position. This will be described in detail below with reference to FIGS. 7 to 9.

FIG. 7 is a view for describing a process in which a battery enters a battery gripper 1 according to an embodiment of the present disclosure.

Referring to FIGS. 1 and 7, the side support 10 according to an embodiment of the present disclosure may include a first side support 10A and a second side support 10B. More specifically, the side support 10 may include a first side support 10A that includes the first magnet adapter 11; and a second side support 10B that does not include the first magnet adapter 11. The first side support 10A may be a support configured such that the first magnet adapter 11 is detachable therefrom.

When the battery cell B enters the battery gripper 1, a second side support 10B may be provided on the battery gripper 1 as shown in FIG. 7. The first side support 10A may be spaced apart from the second side support 10B when the battery cell B enters the battery gripper 1. Accordingly, when the battery cell B enters the battery gripper 1, the battery cell B may not be affected by the first magnet 12. That is, the battery cell B may enter to contact the second side support 10B without being affected by the first magnet 12 gripper.

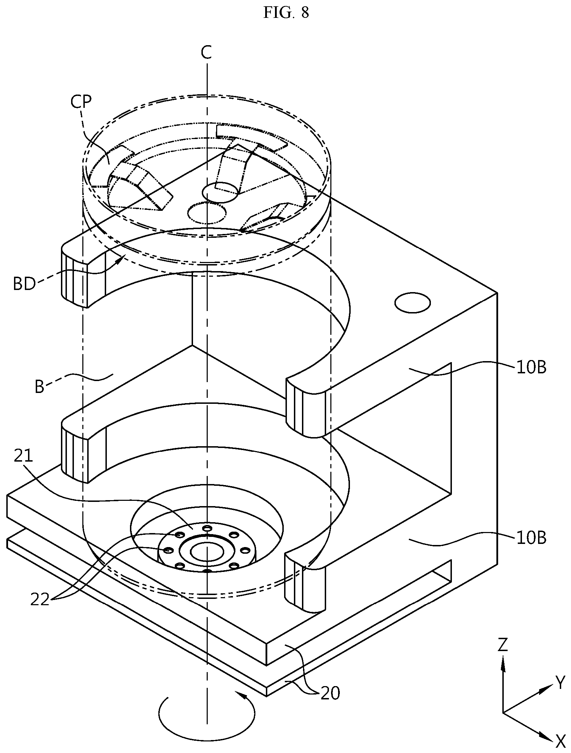

FIG. 8 is a view for describing a process of aligning the position of the battery in a battery gripper 1 according to an embodiment of the present disclosure after the battery enters.

Referring to FIG. 8, the entered battery cell B may be located on the same axis as the second magnet adapter 21. At this time, the welding position between the beading portion BD and the current collector plate CP of the battery cell B may deviate from the correct position. In this case, the battery gripper 1 may recognize the misaligned angle. The battery gripper 1 may rotate the second magnet adapter 21 by the misaligned angle. That is, the second magnet adapter 21 may rotate by the misaligned angle with respect to the central axis C. Accordingly, the second magnet 22 embedded in the second magnet adapter 21 may also rotate by a predetermined angle with respect to the central axis C. As a result, the battery cell B may also rotate by a predetermined angle with respect to the central axis C due to the magnetic force of the second magnet 22. That is, the battery cell B may rotate by the misaligned angle. Finally, the battery cell B may be rotated so that the welding position between the beading portion BD and the current collector plate CP is set to the correct position.

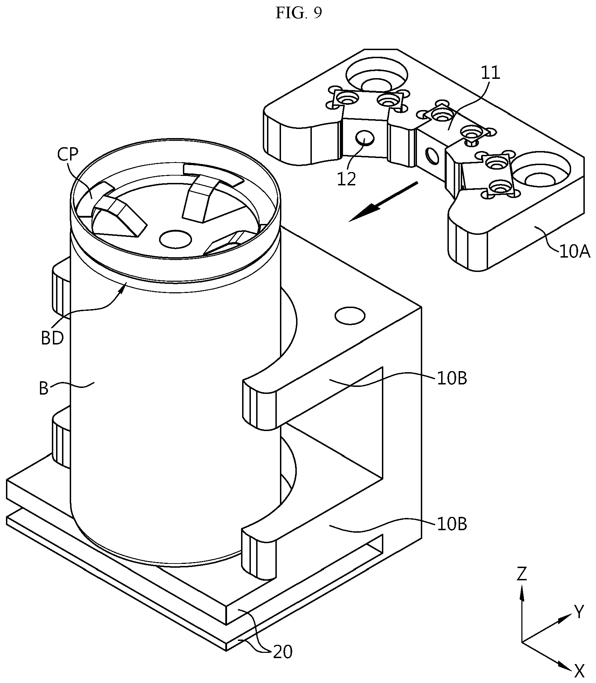

FIG. 9 is a view for describing a process in which a first side support 10A of a battery gripper 1 according to an embodiment of the present disclosure enters the battery after aligning the position of the battery.

Referring to FIG. 9, the first side support 10A may be configured to be capable of advancing toward the battery cell B; and retreating from the battery cell B.

Specifically, only after the welding position between the beading portion BD and the current collector plate CP of the battery cell B is set to the correct position, the first side support 10A may enter the battery cell B. The first side support 10A may fix the battery cell B so that it does not rotate any more in the circumferential direction. That is, the second magnet adapter 21 may rotate to accurately set the welding position between the beading portion BD and the current collector plate CP of the battery cell B, and then the first magnet adapter 11 may fix the exact set position. Accordingly, it is possible to prevent the battery cell B from slipping by holding the battery cell B with magnetic force. As a result, it can be expected to improve the position alignment of the battery cell B and the welding position inspection yield, and welding quality can be improved.

Meanwhile, the second magnet adapter 21 may be configured to be capable of advancing toward the battery cell B; and retreating from the battery cell B.

That is, when the welding position between the beading portion BD and the current collector plate CP is set and fixed to the correct position, the second magnet adapter 21 may retreat in a direction away from the battery cell B. Accordingly, the battery cell B may move to the next rotary.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of Reference Signs]

1: battery gripper
10: side support
10A: first side support
10B: second side support
11: first magnet adapter
12: first magnet
20: lower support
21: second magnet adapter
22: second magnet
B: battery cell
BD: beading portion
CP: current collector plate
C: central axis

## Claims

1. A battery gripper, comprising:
a side support supporting the side surface of a battery cell;
at least one first magnet adapter provided in at least some areas of the side support;
a first magnet embedded in the first magnet adapter and configured to face the battery cell; and
a lower support supporting the lower surface of the battery cell.

2. The battery gripper according to claim 1,
wherein the first magnet adapter is configured to be detachable from the side support.

3. The battery gripper according to claim 1,
wherein the first magnet adapter is provided in plurality spaced apart from each other by a predetermined distance along the outer circumferential surface of the battery cell.

4. The battery gripper according to claim 1, comprising:
a second magnet adapter provided in at least some areas of the lower support; and
a second magnet embedded in the second magnet adapter and configured to face the battery cell.

5. The battery gripper according to claim 4,
wherein the second magnet adapter is configured to be detachable from the lower support.

6. The battery gripper according to claim 4,
wherein the second magnet adapter has a disk shape.

7. The battery gripper according to claim 4,
wherein the second magnet is provided along the circumferential direction of the second magnet adapter.

8. The battery gripper according to claim 4,
wherein the second magnet adapter is configured to be rotatable with respect to the central axis of the battery cell.

9. The battery gripper according to claim 4, comprising a motor connected to the second magnet adapter.

10. The battery gripper according to claim 1,
wherein the side support comprises:
a first side support that comprises the first magnet adapter; and
a second side support that does not comprise the first magnet adapter.

11. The battery gripper according to claim 10,
wherein the first side support is configured to be capable of:
advancing toward the battery cell; and
retreating from the battery cell.

12. The battery gripper according to claim 4,
wherein the second magnet adapter is configured to be capable of:
advancing toward the battery cell; and
retreating from the battery cell.

13. The battery gripper according to claim 1,
wherein the side support and the lower support comprise a resin material.
